# EUROPEAN PATENT SPECIFICATION

(11) **EP 1 071 149 B1**
(45) Date of publication and mention of the grant of the patent: **29.11.2006**
(21) Application number: 99118206.4
(22) Date of filing: 13.09.1999
(51) Int. Cl.: H01M 8/10, H01B 1/12

(54) **Proton conductor and method for manufacturing thereof, and fuel cell**
Protonenleiter, Verfahren zu seiner Herstellung und Brennstoffzelle
Conducteurs protoniques, leurs procédés de fabrication et pile à combustible

(30) Priority: 19.07.1999 JP 20403899
(43) Date of publication of application: 24.01.2001
(73) Proprietor: SONY CORPORATION, Tokyo (JP)
(72) Inventor: Hinokuma, Koichiro, Shinagawa-ku, Tokyo (JP); Ata, Masafumi, Shinagawa-ku, Tokyo (JP)
(74) Representative: Müller - Hoffmann & Partner

(56) References cited:
- US-A- 5 294 732
- CHIANG L Y ET AL: "EFFICIENT SYNTHESIS OF POLYHYDROXYLATED FULLERENE DERIVATIVES VIA HYDROLYSIS OF POLYCYCLOSULFATED PRECURSORS" JOURNAL OF ORGANIC CHEMISTRY, AMERICAN CHEMICAL SOCIETY. EASTON, US, vol. 59, no. 14, 1994, pages 3960-3968, XP002950759 ISSN: 0022-3263
- PATENT ABSTRACTS OF JAPAN vol. 015, no. 408 (E-1123), 17 October 1991 (1991-10-17) -& JP 03 167712 A (AGENCY OF IND SCIENCE & TECHNOL; others: 01), 19 July 1991 (1991-07-19)

## Description

### BACKGROUND OF THE INVENTION

### Field of the Invention

This invention relates to a method of manufacturing a proton conductor according to independent claim 8, the use according to independent claim 1 and a fuel cell comprising the proton conductor according to independent claim 16.

### Description of Related Art

Recently, a fuel cell which uses proton (hydrogen ion) conductive polymer material such as perfluorosulfonic acid resin (for example, product of Du Pont, Nafion (R)) has been known as a polymer solid electrolyte type fuel cell, for example, used for automobiles.

Furthermore, poly-molybdic acids and oxides having abundant hydrated water such as H₃Mo₁₂PO₄₀ · 29H₂O and Sb₂O₅ · 5.4H₂O has been known as relatively new proton conductors.

Polymer materials and hydrated oxides of this type exhibit high proton conductivity under a room temperature and high humidity condition.

In detail, perfluorosulfonic acid resin is exemplified herein under. Protons ionized from sulfonic groups are combined (hydrogen bond) with plentiful water which is retained in polymer matrix to form protonated water namely oxonium ion (H₃O+), and protons can move smoothly in the polymer matrix in the form of oxonium ion, therefore the matrix material of this type can exhibit high proton conduction effect.

On the other hand, recently proton conductor which involves entirely different conduction mechanism from the above-mentioned mechanism has been developed.

In detail, it has been found that complex metal oxides having perovskite structure such as SrCeO₃ doped with Yb exhibit proton conductivity without water moving medium. In this case, it is likely that a proton is conducted by means of channeling among oxygen ions which constitute the skeleton of the perovskite structure.

In other words, the proton does not exist in the complex metal oxide originally but high temperature water molecules react with oxygen defects formed in the perovskite structure by doping when the perovskite structure is brought into contact with water vapor contained in the surrounding atmospheric gas and protons are formed from the reaction at that time.

However, the above-mentioned proton conductors are disadvantageous as described herein under.

First, it is required that matrix material such as above-mentioned perfluorosulfonic acid resin must be maintained in sufficiently wet condition continuously (from starting of use and during use) to maintain the proton conductivity high.

Therefore, the system structure such as a fuel cell requires a humidifier and various auxiliary apparatus, and such requirement results in large sized apparatus and expensive system structure.

Furthermore, the operable temperature range is limited because moisture contained in the matrix must be prevented from freezing and boiling.

The above-mentioned complex metal oxide having perovskite structure must be maintained at a temperature as high as 500°C for efficient proton conduction.

As described herein above, conventional proton conductors are disadvantageous in that the operation depends significantly on the atmosphere, in other words, moisture must be supplied or water vapor is required, and the operable temperature is too high or the operable temperature range is very narrow.

### OBJECT AND SUMMARY OF THE INVENTION

The present invention was accomplished to solve the above-mentioned problem thoroughly, it is the object of the present invention to provide a fuel cell comprising a less atmosphere-dependent proton conductor which is used in a wide temperature range including the room temperature without moisture, regardless whether the moisture is a moving medium or not, a manufacturing method of the proton conductor, and its use.

A proton conductor of the present invention consists mainly of a fullerene derivative having one or more proton releasable groups introduced to component carbon atoms of a fullerene molecule.

A method for manufacturing a proton conductor of the present invention comprises a step for introducing one or more proton releasable groups to component carbon atoms of a fullerene molecule to form a fullerene derivative, and a step for press molding fullerene derivative powder into a desired shape.

A fuel cell of the present invention comprises the first electrode, the second electrode and a proton conductor placed between both the electrodes, wherein the proton conductor consists mainly of fullerene derivative having one or more proton (H+) releasable groups introduced to component carbon atoms of a fullerene molecule.

Because the proton conductor of the present invention mainly contains the proton releasable fullerene derivative, protons are easily releasable under a dry condition and exhibit high conductivity over a wide temperature range including the room temperature (at least in a range from about 120°C to -40°C).

Because a manufacturing method of the present invention comprises a step for introducing one or more proton releasable groups to component carbon atoms of a fullerene molecule to obtain a fullerene derivative, and a step for press molding fullerene derivative powder, the proton conductor having the above-mentioned unique characteristics is manufactured efficiently without any binder resin.

Because a fuel cell of the present invention comprises the first electrode, the second electrode and the above-mentioned proton conductor placed between both the electrodes, the fuel cell does not requires a humidifier and can be made small sized and simplified.

### BRIEF DESCRIPTION OF THE DRAWINGS

Figs. 1A and 1B are structural diagrams of a fullerene molecule.
Figs. 2A and 2B are structural diagrams of polyhydroxyl fullerene, which is an example of fullerene derivatives, used in the present invention.
Figs. 3A to 3C are schematic diagrams for illustrating examples of the fullerene derivative used in the present invention.
Fig. 4 is a schematic diagram for illustrating an example of a proton conductor of the present invention.
Fig. 5 is a diagram for illustrating an equivalent circuit of the proton conductor shown in Fig. 4.
Figs. 6A and 6B are structural diagrams for illustrating a fuel cell in accordance with one embodiment of the present invention.
Fig. 7 is a graph for describing the measurement result of the complex impedance of a pellet used in one example of the present invention.
Fig. 8 is a graph for describing the temperature dependence of the proton conductivity of the above-mentioned pellet.

### DETAILED DESCRIPTION OF THE PREFERRED EMBODIMENTS

The present invention will be described in detail hereinafter based on embodiments.

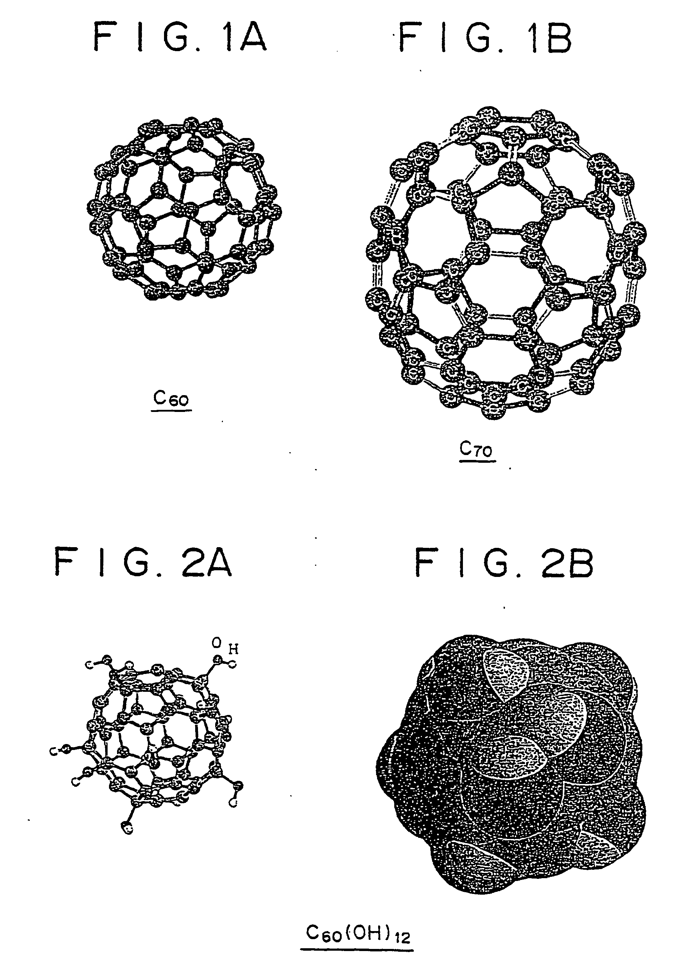

In the present invention, the fullerene molecule which functions as the mother body for accepting the proton releasable group is not limited particularly as long as it is a spherical cluster molecule, however usually the fullerene molecule selected from among C₃₆, C₆₀ (refer to Fig. 1A), C₇₀ (refer to Fig. 1B), C₇₆, C₇₈, C₈₀, C₈₂, and C₈₄ is used solely or in the form of a mixture which contains one or more types.

These fullerene molecules were found in 1985 in mass spectrum of cluster beam obtained by ablation of carbon (Kroto, H. W.; Heath, J. R.; O'Brien. S. C.; Curl, R. F.; Smalley, R. E. Nature 1985, 318, 162). A method for manufacturing was found 5 years later from the first discovery, that is, a method for manufacturing by means of arc discharge of carbon electrode was found in 1990, and since that time, fullerene has attracted attentions as carbon base semiconductor material.

The inventors of the present invention had been engaged in the research of proton conductivity of fullerene derivatives and found that polyhydroxyl fullerene obtained by introducing hydroxyl group to structural carbon atoms of fullerene exhibited high proton conductivity in a wide temperature range including the room temperature, namely a temperature range outside the freezing point and boiling point of water (at least 120°C to - 40°C) under dry condition. Furthermore, it was found that the proton conductivity was more remarkable when hydrogensulfate ester group was introduced to the structural carbon atoms of fullerene instead of hydroxyl group.

In detail, the term polyhydroxyl fullerene is a generic name of the compound which has the structure of fullerene having a plurality of hydroxyl groups as shown in Fig. 2A, and this compound is called as "Fullerenol" that is the common name. It is natural that some variation of the number of hydroxyl groups and location in a molecule is possible. Fullerenol was synthesized and reported first in 1992 by Chiang (Chiang, L. Y.; Swirczewski, J. W.; Hsu, C. S.; Chowdhury, S. K.; Cameron, S.; Creegan, K. J. Chem. Soc, Chem. Commun. 1992, 1791). Since that time, fullerenol having hydroxyl groups more than a certain extent has attracted attentions because of the water soluble feature, and has been studied in the field of bio-technology.

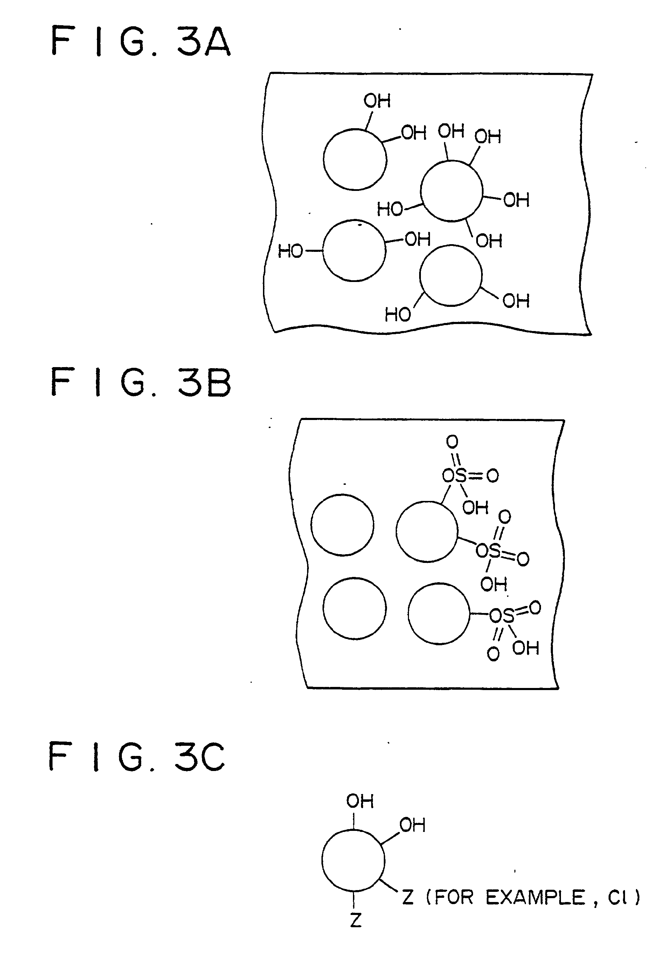

The present invention is based on the findings that fullerenol is coagulated as shown schematically in Fig. 3A to thereby cause mutual interaction between hydroxyl groups of neighboring fullerenol molecules (represented by ○), and the interaction causes high proton conductive characteristics (in other words, dissociation of H+ from phenolic hydroxyl group of fullerenol molecule) in the form of bulk material.

Otherwise, the object of the present invention is achieved also by using a proton conductor having the main structure of coagulated fullerene having a plurality of -OSO₃. A fullerene derivative in which -OH group of polyhydroxyl fullerene is substituted with -OSO₃ group as shown in Fig. 3B, namely hydrogensulfate esterified fullerenol, was reported by Chiang et. al in 1994 (Chiang. L. Y.; Wang, L. Y.; Swirczewski, J. W.; Soled, S.; Cameron, S. J. Org. Chem. 1994, 59, 3960). Some hydrogensulfate esterified fullerenol may contain only -OSO₃, but otherwise some hydrogensufate esterified fullerene may contain both a plurality of hydroxyl groups and a plurality of -OSO₃ groups in a molecule.

Because the proton conduction as the bulk comprising coagulated material as described herein above directly involves motion of protons derived from abundant hydroxyl groups and -OSO₃ groups contained originally in a molecule, it is not required to take in hydrogen or proton derived from water vapor molecules from the atmosphere, and it is not required to absorb moisture from the outside air for proton conduction of the material, therefore the proton conduction is not dependent on the atmosphere. The fullerene portion that is the base of these molecules is very electrophilic, and the electrophilic property acts likely on not only highly acidic OSO₃ group but also hydroxyl group to release hydrogen ion. Such mechanism is a cause of excellent proton conductivity.

Because many hydroxyl groups and -OSO₃ groups can be contained in a molecule to result in high proton density per volume, which proton is involved in conduction, the high proton density is another reason of the effective conductivity.

Because this material mainly consists of carbon atoms, the material is not involved in resource problem and environmental pollution problem. The production cost of fullerene is now decreasing rapidly, fullerene is an ideal material in view of resource, environment, and cost.

Furthermore, the above-mentioned group which can dissociate proton is not limited to hydroxyl group and -OSO₃ group according to the result of investigation.

In detail, the dissociative group is represented by -XH, wherein X may be an bivalent arbitrary atom or atomic group. Further the group is represented by -OH or -YOH, wherein Y may be an bivalent arbitrary atom or atomic group.

In detail, any one of -COOH, -SO₃H, and -OPO(OH)₃ is preferable in addition to the above-mentioned -OH or -OSO₃H as the above-mentioned proton releasable group.

Furthermore, in the present invention, it is preferable to introduce electron attractive group such as nitro group, carbonyl group, carboxyl group, nitrile group, halogenated alkyl group, or halogen atom (fluorine or chlorine) to component carbon atoms of a fullerene molecule. A fullerene molecule to which Z is introduced in addition to -OH is shown in Fig. 3C. In detail, the Z is -NO₂,-CN, -F, -Cl, -COOR, -CHO, -COR, -CF₃, -SO₃, or -CF₃ (wherein R denotes an alkyl group). Co-existence of electron attractive group allows the above-mentioned proton releasable group to release protons easily because of electron attractive effect of the electron attractive group.

In the present invention, the number of the above-mentioned proton releasable groups to be introduced to a fullerene molecule may be arbitrary within the number of component carbons of a fullerene molecule, but preferably 5 or more. To render fullerene effectively electron attractive with remaining π electron characteristics of fullerene, the above-mentioned number is preferably equal to a half of the number of component carbons of fullerene or less.

The proton conductor of the present invention mainly comprises the above-mentioned fullerene derivatives. To synthesize a fullerene derivative, powder of the above-mentioned fullerene is subjected to known treatments such as acid treatment and hydrolysis combinedly to introduce desired proton releasable group to a component carbon atom of a fullerene molecule as shown in examples described hereinafter.

The obtained powder of fullerene derivative is subjected to press molding to form in desired shape, for example, pellet. At that time, it is not necessary to use binder, and the no binder press molding is advantageous for enhancing the proton conductivity and light weight characteristic of the proton conductor.

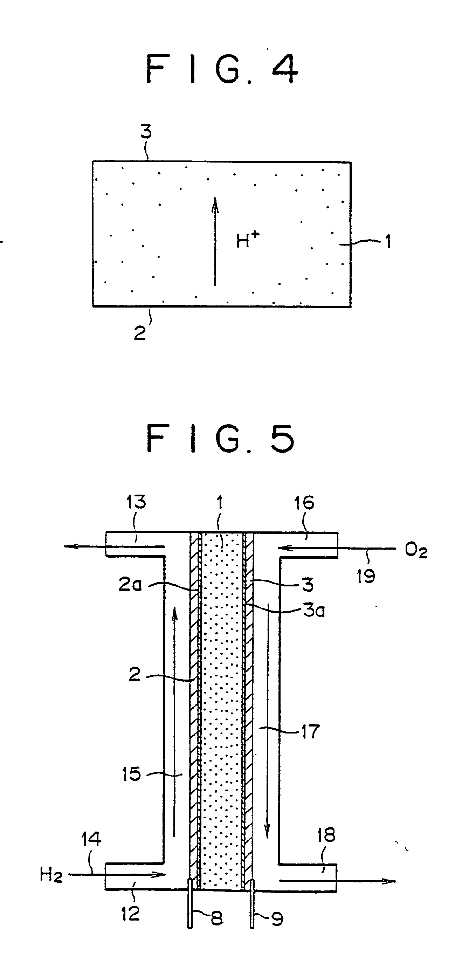

Application of the proton conductor of the present invention to, for example, fuel cell is particularly preferable. Fig. 4 shows a schematic diagram of a fuel cell, a proton conductive section 1 is placed between the first electrode (for example, hydrogen electrode) 2 and the second electrode (for example, oxygen electrode) 3, and released protons move from the first electrode 2 side to the second electrode 3 side along the arrow direction (in the case of a fuel cell, protons supplied from the first electrode 2 side and protons generated in the proton conductive section 1, these two types of proton, move)

Fig. 5 shows a detailed example of a fuel cell which uses a proton conductor of the present invention.

The fuel cell has a negative electrode (fuel electrode or hydrogen electrode) 2 and a positive electrode (oxygen electrode) 3 provided respectively with a terminals 8 and 9, which electrodes are in contact with or contain catalysts 2a and 3a respectively and are faced each other, and the proton conductive section 1 is placed between these electrodes. Hydrogen is supplied to an entrance 12 on the negative electrode 2 side and discharged from the exit 13 (in some cases, there is no exit) during operation. Fuel (H₂) 14 generates protons during motion through a flow passage 15, the protons move to the positive electrode 3 side together with protons generated in the proton conductive section 1, and react with oxygen (air) 19, which is supplied from an entrance 16 to the flow passage 17 and moved toward an exit 18, and then a desired electromotive force is taken out.

Because protons supplied from the negative electrode 2 side move toward the positive electrode 3 side with dissociation of protons in the proton conductive section 1, a fuel cell having the structure described herein above is advantageous in high proton conductivity. Therefore a humidifier is not necessary, and the system can be made simple and light weight.

The present invention will be described in detail hereinafter with reference to examples.

### First Example

### <Synthesis of polyhydroxyl fullerene>

Polyhydroxyl fullerene was synthesized according to a method described in the literature (Chiang, L. Y.; Wang, L Y.; Swirczewski, J. W.; Soled, S.; Cameron, S. J. Org. Chem. 1994, 59, 3960). 2 g of powder of C₆₀/C₇₀ mixture which contains about 15 % of C₇₀ was put in 30 ml of fuming sulfuric acid, and was stirred for 3 days at 57 °C in a nitrogen atmosphere. The obtained reaction product was put into anhydrous diethylether cooled in an ice bath little by little. The obtained precipitate was separated by means of centrifugal separation, washed three times with diethylether and twice with a 2:1 mixture of diethylether and acetonitrile, and dried at 40 °C in vacuum. Next, the dried product was put in ion-exchanged water and stirred at 85 °C for 10 hours with nitrogen bubbling. The precipitate was separated from the reaction product by means of centrifugal separation and washed with pure water several times, and centrifugal separation was repeated, then the precipitate was dried at 40 °C in a reduced pressure. FT-IR measurement was carried out on the obtained brown powder, the obtained spectrum agreed with the IR spectrum of C₆₀(OH)₁₂ shown in the above-mentioned literature, and the precipitate was confirmed to be the target polyhydroxyl fullerene.

### <Molding of polyhydroxyl fullerene coagulated pellet>

90 mg of polyhydroxyl fullerene powder obtained as described herein above was pressed in one direction to form a circular pellet having a diameter of 15 mm. The press pressure was about 7 ton/cm² (7000 kg/cm²) As the result, the precipitate was formed in pellet shape smoothly though any binder resin was not used. Thickness of the pellet was about 300 microns (300 µm). This pellet is referred to as Example 1 pellet.

### Second Example

### <Synthesis 1 of polyhydroxyl fullerene hydrogensulfate ester (entire esterification) 1>

The synthesis was carried out with according to the above-mentioned literature. 1 g of polyhydroxyl fullerene powder was put in 60 ml of fuming sulfuric acid and stirred at a room temperature for 3 days in a nitrogen atmosphere. The obtained reaction product was put gradually into anhydrous diethylether cooled in an ice bath. The obtained precipitate was separated by means of centrifugal separation, washed with diethylether three times and with a 2:1 mixture of diethylether and acetonitrile twice, and then dried at 40 °C in a reduced pressure. FT-IR measurement was carried on the obtained powder, the obtained IR spectrum agreed with the IR spectrum of the fullerene derivative in which all the hydroxyl groups were converted to hydrogensulfate ester groups, and the obtained product was confirmed to be the target substance.

### <Molding of polyhydroxyl fullerene hydrogensulfate ester pellet 1>

70 mg of the obtained polyhydroxyl fullerene hydrogensulfate ester was pressed in one direction to form a circular pellet having a diameter of 15 mm. The press pressure was about 7 ton/cm². As the result, the precipitate was formed in pellet shape smoothly though any binder resin was not used. Thickness of the pellet was about 300 microns. This pellet is referred to as Example 2 pellet.

### Third Example

### <Synthesis of polyhydroxyl fullerene hydrogensulfate ester (partial esterification) 2>

2 g of powder of C₆₀/C₇₀ mixture was put in 30 ml of fuming sulfuric acid, and was stirred for 3 days at 57 °C in a nitrogen atmosphere. The obtained reaction product was put into anhydrous diethylether cooled in an ice bath little by little. In this case, diethylether which was not subjected to dehydration treatment was used. The obtained precipitate was separated by means of centrifugal separation, washed three times with diethylether and twice with a 2:1 mixture of diethylether and acetonitrile, and dried at 40 °C in a reduced pressure. FT-IR measurement was carried out on the obtained powder, the obtained spectrum agreed with the IR spectrum of fullerene derivative containing both hydroxyl groups and OSO₃H groups shown in the above-mentioned literature, and the target substance was obtained.

### <Molding of polyhydroxyl fullerene hydrogensulfate ester coagulated pellet 2>

80 mg of polyhydroxyl fullerene powder which was partially hydrogensulfate esterified was pressed in one direction to form a circular pellet having a diameter of 15 mm. The press pressure was about 7 ton/cm². As the result, the precipitate was formed in pellet shape smoothly though any binder resin was not used. Thickness of the pellet was about 300 microns. This pellet is referred to as Example 3 pellet.

### <Molding of fullerene coagulated pellet>

As a Comparative Example, 90 mg of fullerene powder which was used as the synthesis raw material in the above-mentioned Example was pressed in one direction to form a circular pellet having a diameter of 16 mm. The press pressure was about 7 ton/cm². As the result, the precipitate was formed in pellet shape smoothly though any binder resin was not used. Thickness of the pellet was about 300 microns. This pellet is referred to as Comparative Example 1 pellet.

### <Measurement of proton conductivity of pellets of Examples and Comparative Example>

To measure the conductivity of pellets obtained in Examples and Comparative Example, first aluminum plate having the same diameter (15 mm) as those of pellets were put on both sides of respective pellets, an alternating voltage (amplitude of 0.1 V) which ranged from 7 MHz to 0.01 Hz was applied to a pellet, and the complex impedance was measured with varying frequency. The measurement was carried out in a dry atmosphere.

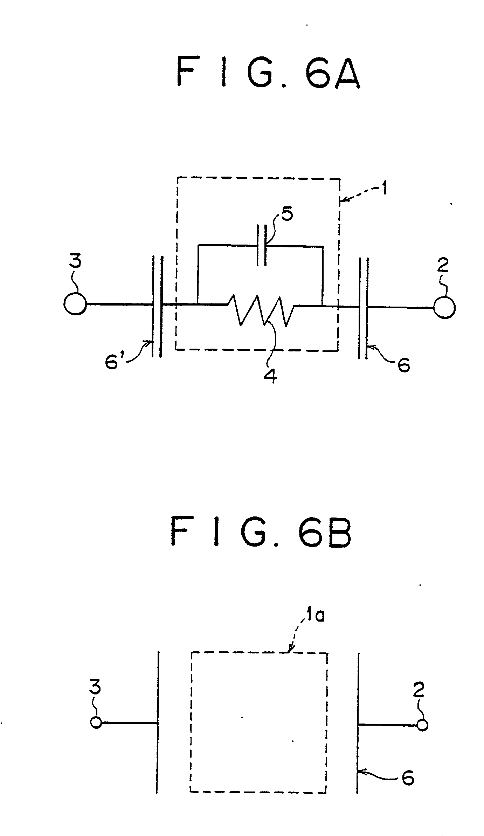

In association with impedance measurement, the proton conductive section 1 of a proton conductor comprising the above-mentioned pellet forms an electrically equivalent circuit as shown in Fig. 6A, capacitances 6 and 6' are formed between proton conductive section 1 represented by a parallel circuit comprising a resistance 4 and capacitance 5 and the first electrode 2 and between the proton conductive section 1 and the second electrode 3 respectively. The capacitance 5 represents the delay effect caused when protons move (phase delay of high frequency), and the resistance 4 represents the proton mobility parameter. Herein, the measured impedance Z is represented by Z=Re(Z) + i · Im (Z). The frequency dependence of proton conductive section represented by the above-mentioned equivalent circuit was examined. Fig. 6B shows a diagram of the equivalent circuit for the case in which normal non-proton releasable fullerene is used (Comparative Example described hereinafter).

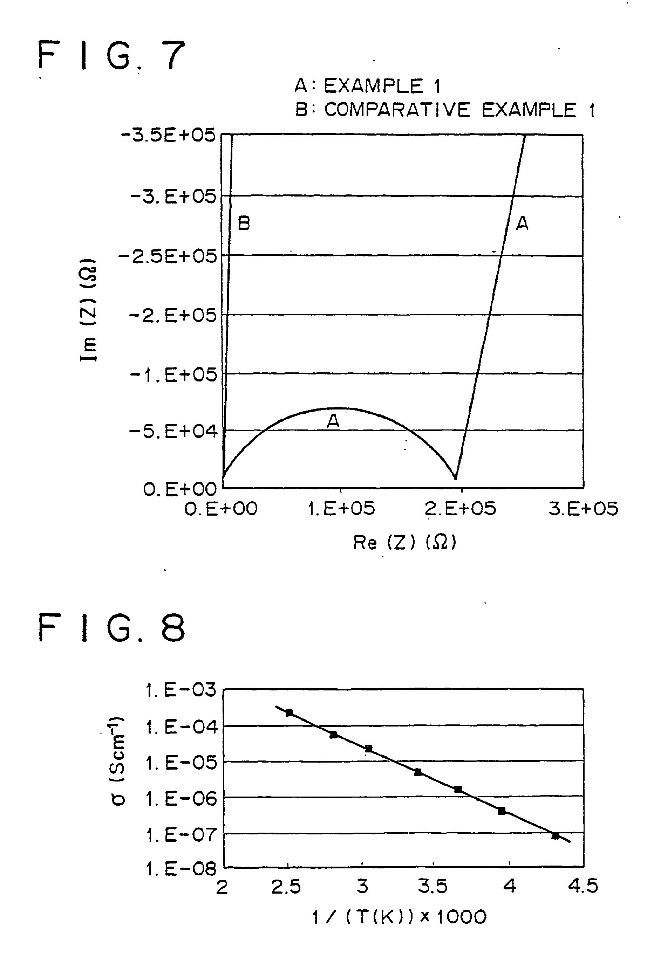

Impedance measurement result on pellets obtained in Example 1 and Comparative Example 1 is shown in Fig. 7.

As shown in Fig. 7, in Comparative Example 1, the frequency characteristics of the complex impedance is the same as that of capacitor itself, and no conduction behavior of charged particles (electron or ion) is observed for the coagulated fullerene itself. On the other hand, in the case of Example 1, a very clear single semicircular arc is observed though it is flat in the high frequency region. This fact suggests the conduction behavior of charged particle in the internal of the pellet. Further, rapid rise of imaginary part of the impedance is observed in the low frequency region. This fact suggests that charged particle is blocked between the aluminum electrode when an AC voltage becomes similar to DC voltage, because the charged particle on the aluminum electrode side is naturally electron, it is understood that charged particle in the internal of the pellet is neither electron nor hole but other charged particle, namely ion. Based on the structure of used fullerenol, the charged particle is definitely estimated to be proton.

The conductivity of the charged particle can be calculated from the intercept on X-axis of the circular arc in the high frequency region, and the calculated conductivity is approximately 5×10⁻⁶ S/cm for Example 1 pellet. Furthermore, the same measurement was carried out on pellets obtained in Example 2 and Example 3 to obtain the impedance frequency characteristics similar to that of Example 1 in the whole shape. The conductivity obtained from the X-axis intercept of the circular arc is different in value respectively as shown in Table 1.

**Table 1 Conductivity of Proton Conductor Pellets of the Present Invention (at 25°C)**

| Pellet type | Conductivity (S/cm) |
|---|---|
| Example 1 | 5 × 10⁻⁶ |
| Example 2 | 9 × 10⁻⁴ |
| Example 3 | 2 × 10⁻⁵ |

The conductivity in pellet is increased by substituting hydroxyl group with -OSO₃H group as described herein above. The reason is that hydrogen of OSO₃ is ionized easier than that of hydroxyl group. Anyway, it is found that the proton conduction is realized in coagulated fullerene derivatives of this type at a room temperature in a dry atmosphere in the case of hydroxyl group, -OSO₃H group, or mixture of both the groups.

Next, the above-mentioned complex impedance measurement was carried out over a temperature range from 120 °C to -40 °C, and the temperature dependence of the conductivity calculated from the circular arc on high frequency side was examined. The results is shown in Fig. 8 in the form of Arrhenius' plot. It is obvious that the value varies linearly in the range from 120 °C to -40 °C. In other words, it is understood that a single ion conduction mechanism involves in this temperature range. The proton conductor of the present invention functions as a proton conductor in a wide temperature range including the room temperature and particularly including the temperature as high as 120 °C and as low as -40 °C.

As described hereinbefore, because the proton conductor of the present invention mainly comprises fullerene derivative having the proton releasable group introduced to component carbon atoms of a fullerene molecule, the proton conductor exhibits high proton conduction in a wide temperature range including the room temperature even in the dry condition, and because the fuel cell of the present invention equipped with this proton conductor is used without restriction of atmosphere, a small sized simple system is realized.

## Claims

1. Use of a fullerene derivative having one or more proton (H+) releasable groups introduced to component carbon atoms of a fullerene molecule as a proton conductor.

2. Use as claimed in claim 1, wherein said proton releasable group is represented by -XH, wherein X denotes an arbitrary bivalent atom or atomic group and H denotes a hydrogen atom.

3. Use as claimed in claim 1, wherein said proton releasable group is represented by -OH or -YOH, wherein Y denotes an arbitrary bivalent atom or atomic group, H denotes a hydrogen atom, and O denotes an oxygen atom.

4. Use as claimed in claim 3, wherein said proton releasable group is selected from a group consisting of -OH, -COOH, -SO₃H, and -OPO(OH)₃.

5. Use as claimed in claim 1, wherein one or more proton releasable groups and electron attractive groups are introduced to said fullerene molecule.

6. Use as claimed in claim 5, wherein said electron attractive group is selected from a group consisting of nitro group, carbonyl group, nitrile group, halogenated alkyl group, and halogen atom.

7. Use as claimed in claim 1, wherein said fullerene molecule is a spherical carbon cluster molecule Cₘ, wherein m = 36, 60, 70, 78, 82, and 84.

8. A method for manufacturing a proton conductor comprising a step for introducing one or more proton releasable groups to component carbon atoms of a fullerene molecule to form a fullerene derivative, and a step for press molding fullerene derivative powder into a desired shape.

9. A method for manufacturing a proton conductor as claimed in claim 8, wherein said fullerene derivative powder is pelletized without binder.

10. A method for manufacturing a proton conductor as claimed in claim 8, wherein said proton releasable group is represented by -XH, wherein X denotes an arbitrary bivalent atom or atomic group and H denotes a hydrogen atom.

11. A method for manufacturing a proton conductor as claimed in claim 8, wherein said proton releasable group is represented by -OH or -YOH, wherein Y denotes an arbitrary bivalent atom or atomic group, H denotes a hydrogen atom, and O denotes an oxygen atom.

12. A method for manufacturing a proton conductor as claimed in claim 8, wherein said proton releasable group is selected from a group consisting of -OH, -COOH, -SO₃H, and -OPO(OH)₃.

13. A method for manufacturing a proton conductor as claimed in claim 8, wherein one or more proton releasable groups and electron attractive groups are introduced to said fullerene molecule.

14. A method for manufacturing a proton conductor as claimed in claim 8, wherein said electron attractive group is selected from a group consisting of nitro group, carbonyl group, nitrile group, halogenated alkyl group, and halogen atom.

15. A method for manufacturing a proton conductor as claimed in claim 8, wherein said fullerene molecule is a spherical carbon cluster molecule Cₘ, wherein m = 36, 60, 70, 78, 82, and 84.

16. A fuel cell comprising the first electrode, the second electrode and a proton conductor placed between both said electrodes, said proton conductor consisting mainly of fullerene derivative having one or more proton (H+) releasable groups introduced to component carbon atoms of a fullerene molecule.

17. A fuel cell as claimed in claim 16, wherein said proton releasable group is represented by -XH, wherein X denotes an arbitrary bivalent atom or atomic group and H denotes a hydrogen atom.

18. A fuel cell as claimed in claim 16, wherein said proton releasable group is represented by -OH or -YOH, wherein Y denotes an arbitrary bivalent atom or atomic group, H denotes a hydrogen atom, and O denotes an oxygen atom.

19. A fuel cell as claimed in claim 16, wherein said proton releasable group is selected from a group consisting of -OH, -COOH, -SO₃H, and -OPO(OH)₃.

20. A fuel cell as claimed in claim 16, wherein one or more proton releasable groups and electron attractive groups are introduced to said fullerene molecule.

21. A fuel cell as claimed in claim 16, wherein said electron attractive group is selected from a group consisting of nitro group, carbonyl group, nitrile group, halogenated alkyl group, and halogen atom.

22. A fuel cell as claimed in claim 16, wherein said fullerene molecule is a spherical carbon cluster molecule Cₘ, wherein m = 36, 60, 70, 78, 82, and 84.

## Patentansprüche

1. Verwendung eines Fulleren-Derivats mit ein oder mehreren Gruppen, die Protonen (H⁺) freisetzen können, die in Kohlenstoffatomkomponenten eines Fullerenmoleküls eingeführt sind, als Protonenleiter.

2. Verwendung nach Anspruch 1, worin die Gruppe, die Protonen freisetzen kann, dargestellt ist durch -XH, worin X ein beliebiges zweiwertiges Atom oder eine beliebige zweiwertige Atomgruppe bezeichnet und H ein Wasserstoffatom bezeichnet.

3. Verwendung nach Anspruch 1, worin die Gruppe, die Protonen freisetzen kann, dargestellt wird durch -OH oder -YOH, worin Y ein beliebiges zweiwertiges Atom oder eine beliebige zweiwertige Atomgruppe bezeichnet, H ein Wasserstoffatom bezeichnet und O ein Sauerstoffatom bezeichnet.

4. Verwendung nach Anspruch 3, worin die Gruppe, die Protonen freisetzen kann, ausgewählt ist aus der Gruppe, bestehend aus -OH, -COOH, -SO₃H und -OPO(OH)₃.

5. Verwendung nach Anspruch 1, worin ein oder mehrere Gruppen, die Protonen freisetzen können, und Elektronen-anziehende Gruppen in das Fulleren-Molekül eingeführt sind.

6. Verwendung nach Anspruch 5, worin die Elektronen-anziehende Gruppe ausgewählt ist aus der Gruppe, bestehend aus einer Nitrogruppe, einer Carbonylgruppe, einer Nitrilgruppe, einer halogenierten Alkylgruppe und einem Halogenatom.

7. Verwendung nach Anspruch 1, worin das Fulleren-Molekül ein sphärisches Kohlenstoffclustermolekül Cₘ darstellt, worin m = 36, 60, 70, 78, 82 und 84.

8. Verfahren zur Herstellung eines Protonenleiters, umfassend einen Schritt zur Einführung von ein oder mehreren Gruppen, die Protonen freisetzen können, in Kohlenstoffatomkomponenten eines Fullerenmoleküls, um ein Fulleren-Derivat zu bilden, und einen Schritt des Pressformens des Fulleren-Derivatpulvers in eine gewünschte Form.

9. Verfahren zur Herstellung eines Protonenleiters nach Anspruch 8, worin das Fulleren-Derivatpulver ohne Bindemittel pelletiert wird.

10. Verfahren zur Herstellung eines Protonenleiters nach Anspruch 8, worin die Gruppe, die Protonen freisetzen kann, dargestellt wird durch -XH, worin X ein beliebiges zweiwertiges Atom oder eine beliebige zweiwertige Atomgruppe bezeichnet und H ein Wasserstoffatom bezeichnet.

11. Verfahren zur Herstellung eines Protonenleiters nach Anspruch 8, worin die Gruppe, die Protonen freisetzen kann, dargestellt wird durch -OH oder -YOH, worin Y ein beliebiges zweiwertiges Atom oder eine beliebige zweiwertige Atomgruppe bezeichnet, H ein Wasserstoffatom bezeichnet und O ein Sauerstoffatom bezeichnet.

12. Verfahren zur Herstellung eines Protonenleiters nach Anspruch 8, worin die Gruppe, die Protonen freisetzen kann, ausgewählt ist aus der Gruppe, bestehend aus -OH, -COOH, -SO₃H und -OPO(OH)₃.

13. Verfahren zur Herstellung eines Protonenleiters nach Anspruch 8, worin ein oder mehrere Gruppen, die Protonen freisetzen können, und Elektronen-anziehende Gruppen in das Fulleren-Molekül eingeführt werden.

14. Verfahren zur Herstellung eines Protonenleiters nach Anspruch 8, worin die Elektronen-anziehende Gruppe ausgewählt ist aus der Gruppe, bestehend aus einer Nitrogruppe, einer Carbonylgruppe, einer Nitrilgruppe, einer halogenierten Alkylgruppe und einem Halogenatom.

15. Verfahren zur Herstellung eines Protonenleiters nach Anspruch 8, worin das Fulleren-Molekül ein sphärisches Kohlenstoffclustermolekül Cₘ darstellt, worin m = 36, 60, 70, 78, 82 und 84.

16. Brennstoffzelle, umfassend die erste Elektrode, die zweite Elektrode und einen Protonenleiter, angeordnet zwischen den beiden Elektroden, wobei der Protonenleiter im Wesentlichen aus einem Fulleren-Derivat mit ein oder mehreren Gruppen, die Protonen (H⁺) freisetzen können, besteht, die in Kohlenstoffatomkomponenten eines Fullerenmoleküls eingeführt sind.

17. Brennstoffzelle nach Anspruch 16, worin die Gruppe, die Protonen freisetzen kann, dargestellt ist durch -XH, worin X ein beliebiges zweiwertiges Atom oder eine beliebige zweiwertige Atomgruppe bezeichnet und H ein Wasserstoffatom bezeichnet.

18. Brennstoffzelle nach Anspruch 16, worin die Gruppe, die Protonen freisetzen kann, dargestellt wird durch -OH oder -YOH, worin Y ein beliebiges zweiwertiges Atom oder eine beliebige zweiwertige Atomgruppe bezeichnet, H ein Wasserstoffatom bezeichnet und O ein Sauerstoffatom bezeichnet.

19. Brennstoffzelle nach Anspruch 16, worin die Gruppe, die Protonen freisetzen kann, ausgewählt ist aus der Gruppe, bestehend aus -OH, -COOH, -SO₃H und -OPO(OH)₃.

20. Brennstoffzelle nach Anspruch 16, worin ein oder mehrere Gruppen, die Protonen freisetzen können, und Elektronen-anziehende Gruppen in das Fulleren-Molekül eingeführt sind.

21. Brennstoffzelle nach Anspruch 16, worin die Elektronen-anziehende Gruppe ausgewählt ist aus der Gruppe, bestehend aus einer Nitrogruppe, einer Carbonylgruppe, einer Nitrilgruppe, einer halogenierten Alkylgruppe und einem Halogenatom.

22. Brennstoffzelle nach Anspruch 16, worin das Fulleren-Molekül ein sphärisches Kohlenstoffclustermolekül Cₘ darstellt, worin m = 36, 60, 70, 78, 82 und 84.

## Revendications

1. Utilisation d'un dérivé de fullerène comportant un ou plusieurs groupes pouvant libérer un proton (H+) introduits dans des atomes de carbone composants d'une molécule de fullerène en tant que conducteur de protons.

2. Utilisation selon la revendication 1, dans laquelle ledit groupe pouvant libérer un proton est représenté par -XH, dans lequel X désigne un atome ou groupe atomique bivalent arbitraire et H désigne un atome d'hydrogène.

3. Utilisation selon la revendication 1, dans laquelle ledit groupe pouvant libérer un proton est représenté par -OH ou -YOH, dans lesquels Y désigne un atome ou groupe atomique bivalent arbitraire, H désigne un atome d'hydrogène et O désigne un atome d'oxygène.

4. Utilisation selon la revendication 3, dans laquelle ledit groupe pouvant libérer un proton est choisi dans le groupe constitué par -OH, -COOH, -SO₃H et -OPO(OH)₃.

5. Utilisation selon la revendication 1, dans laquelle un ou plusieurs groupes pouvant libérer un proton et des groupes attracteurs d'électrons sont introduits dans ladite molécule de fullerène.

6. Utilisation selon la revendication 5, dans laquelle ledit groupe attracteur d'électron est choisi dans le groupe constitué par le groupe nitro, le groupe carbonyle, le groupe nitrile, un groupe alkyle halogéné et un atome d'halogène.

7. Utilisation selon la revendication 1, dans laquelle ladite molécule de fullerène est une molécule d'agrégat de carbone sphérique Cₘ, où m = 36, 60, 70, 78, 82 et 84.

8. Procédé de fabrication d'un conducteur de protons comprenant une étape destinée à introduire un ou plusieurs groupes pouvant libérer un proton dans des atomes de carbone composants d'une molécule de fullerène pour former un dérivé de fullerène, et une étape destinée à mouler sous presse une poudre de dérivé de fullerène en une forme souhaitée.

9. Procédé de fabrication d'un conducteur de protons selon la revendication 8, dans lequel ladite poudre de dérivé de fullerène est pastillée sans liant.

10. Procédé de fabrication d'un conducteur de protons selon la revendication 8, dans lequel ledit groupe pouvant libérer un proton est représenté par -XH, où X désigne un atome ou groupe atomique bivalent arbitraire et H désigne un atome d'hydrogène.

11. Procédé de fabrication d'un conducteur de protons selon la revendication 8, dans lequel ledit groupe pouvant libérer un proton est représenté par -OH ou -YOH, où Y désigne un atome ou groupe atomique bivalent arbitraire, H désigne un atome d'hydrogène et O désigne un atome d'oxygène.

12. Procédé de fabrication d'un conducteur de protons selon la revendication 8, dans lequel ledit groupe pouvant libérer un proton est choisi dans le groupe constitué par -OH, -COOH, -SO₃H et -OPO(OH)₃.

13. Procédé de fabrication d'un conducteur de protons selon la revendication 8, dans lequel un ou plusieurs groupes pouvant libérer un proton et des groupes attracteurs d'électrons sont introduits dans ladite molécule de fullerène.

14. Procédé de fabrication d'un conducteur de protons selon la revendication 8, dans lequel ledit groupe attracteur d'électrons est choisi dans le groupe constitué par le groupe nitro, le groupe carbonyle, le groupe nitrile, un groupe alkyle halogéné et un atome d'halogène.

15. Procédé de fabrication d'un conducteur de protons selon la revendication 8, dans lequel ladite molécule de fullerène est une molécule d'agrégat de carbone sphérique Cₘ, où m = 36, 60, 70, 78, 82 et 84.

16. Pile à combustible comprenant la première électrode, la seconde électrode et un conducteur de protons placé entre les deux dites électrodes, ledit conducteur de protons consistant principalement en un dérivé de fullerène comportant un ou plusieurs groupes pouvant libérer un proton (H+) introduits dans des atomes de carbone composants d'une molécule de fullerène.

17. Pile à combustible selon la revendication 16, dans laquelle ledit groupe pouvant libérer un proton est représenté par -XH, où X désigne un atome ou groupe atomique bivalent arbitraire et H désigne un atome d'hydrogène.

18. Pile à combustible selon la revendication 16, dans laquelle ledit groupe pouvant libérer un proton est représenté par -OH ou -YOH, où Y désigne un atome ou groupe atomique bivalent arbitraire, H désigne un atome d'hydrogène et O désigne un atome d'oxygène.

19. Pile à combustible selon la revendication 16, dans laquelle ledit groupe pouvant libérer un proton est choisi dans le groupe constitué par -OH, -COOH, -SO₃H et -OPO(OH)₃.

20. Pile à combustible selon la revendication 16, dans laquelle un ou plusieurs groupes pouvant libérer un proton et des groupes attracteurs d'électrons sont introduits dans ladite molécule de fullerène.

21. Pile à combustible selon la revendication 16, dans laquelle ledit groupe attracteur d'électrons est choisi dans le groupe constitué par le groupe nitro, le groupe carbonyle, le groupe nitrile, un groupe alkyle halogéné et un atome d'halogène.

22. Pile à combustible selon la revendication 16, dans laquelle ladite molécule de fullerène est une molécule d'agrégat de carbone sphérique Cₘ, où m = 36, 60, 70, 78, 82 et 84.
